# EUROPEAN PATENT APPLICATION

(11) **EP 1 115 049 A2**
(43) Date of publication of application: **11.07.2001**
(21) Application number: 00310849.5
(22) Date of filing: 06.12.2000
(51) Int. Cl.: G06F 1/00

(54) **Secure data transmission over a client-server network**

(30) Priority: 07.12.1999 JP 34813399
(71) Applicant: Kizna.com Inc., Delaware 19801 (US)
(72) Inventor: Miyazawa, Takeo, Mitaka-shi, Tokyo 181-0013 (JP); Okada, Tetsuya, Tokyo 166-0003 (JP)
(74) Representative: Brown, Kenneth Richard

(57) **Abstract**

The present invention allows assuring security of processing by the application itself without depending on the operating system. When a plurality of clients perform joint operation via a common server, the processing permitted for each server to perform to the server is predetermined, and when a user requests a processing which is not permitted, the client rejects this request. By this, the security among a plurality of clients can be assured without depending on the server.

## Description

### BACKGROUND OF THE INVENTION

### 1. Field of the Invention

The present invention relates to a security assurance method for computers in computer and data communication and a medium recording program thereof.

### 2. Description of the Related Art

As the Internet/Internet spreads, electronic commerce over computer networks is under consideration. To implement this, it is critical to assure security of transactions. As a means of security assurance in computer and data communication, authentication by ID and password, encryption of data and electronic signature are known.

An authentication method by ID and password identifies the user as the correct individual by inputting the user's ID and password at login which only that user knows.

Encryption of data encrypts data to be communicated so as to make the interception of information by a third party difficult. As an encryption method, a secret key encryption method, a public key encryption method and a message digesting method are known.

An electronic signature identifies an individual by adding electronic data, to identify an individual, to the data to be communicated. A method using a public key encryption method is known.

When an electronic commerce transaction is performed using the Internet, a predetermined home page is accessed, then the program enters a predetermined safe protocol such as SSL (Secure Sockets Layer). In SSL, the server and the client exchange a security policy and set a selected encryption key. At this time the server and the client exchange a random number. Then the server sends an electronic certificate to the client, which the client authenticates. After authentication, the client encrypts a separately generated random number using a public key embedded in the electronic certificate of the server, and sends the encrypted random number to the server. Then three random numbers, including the two random numbers exchanged first between both ends of the communication, are compressed using such a hash function as MD5, and a common key for encrypting a message and a message authentication code for preventing alteration are generated. Hereafter, communication is performed while data is encrypted by a common key method. The hash function is an operation method to generate a pseudo-random number based on input data, and input data cannot be reproduced from output data since irreversible processing is included. Alteration can be detected by comparing a message processed by a hash function at both ends of the communication.

S-HTTP (Secure Hypertext Transfer Protocol) is known as a similar protocol.

According to a conventional security method, it is possible to increase the security of a message exchange between a server and a client and to prevent a third party from intercepting and reading a message to a degree. But the security of "processing" between a server and a client cannot be increased. For example, the client A can request processing a to the server and the client B can request processing b to the server B, but when the client A and the client B cannot request processing other than the processing permitted to request, the server must reject processing b if requested by the client A. Conventionally, the client is identified by requesting an ID and a password when the client accesses the server, and only the processing permitted to the client is accepted. For example, it can be set that the client A can read data a but cannot read data b. In the same way, it can be set that the client is permitted to access data a but is not permitted to write to data a.

Such security largely depends on the OS. The content of security provided by the OS is limited to whether access is permitted, whether full access including read and write is permitted, or whether only read is permitted. For a conventional client server system, this level of security content is somehow acceptable.

However, as technology advances, not only exchanging messages but in some cases sharing processing is also required in a client server system. For example, this is a case when a plurality of clients perform joint operation via the server. In the case of security in such a client server system for joint operation (the server for this is called the "collaboration server"), it is necessary to authenticate the client, to protect messages between the server and the client from being read by a third party, to permit predetermined processing to the client, and to guarantee not to permit processing other than the predetermined processing. The processing to be the target of security must include various content, and not be limited to the content provided by a conventional OS. For this, the security functions of an OS must be changed, however changing an OS for many clients requires enormous labor. And in the first place changing the security functions of an OS itself is very difficult.

The above description dealt with a client server system, but a similar problem also occurs between an OS and application software on the same computer.

### SUMMARY OF THE INVENTION

To solve the above problem, it is an object of the present invention to provide a device and security assurance method to assure security in computer and data communication, which allows the assurance security of processing by the application itself, without depending on the OS.

A method for assuring security between a server and a client according to the present invention comprises: a step of the client requesting a session to the server; a step of the server authenticating the session request; a step of the server transmitting a corresponding application to the requesting source client; a step of the client authenticating the transmitted application; a step of the client enabling the execution of the application and deciding whether the command which was input to the application is permitted; a step of the client rejecting the command when the command is not permitted; a step of the client executing the command and transmitting the message to the server when the command is permitted; a step of the server deciding whether the transmitted message is valid; a step of the server rejecting the message when the message is not valid; a step of the server executing the message and transmitting a result message thereof to the client when the message is valid; a step of the client authenticating the transmitted result message; and a step of the client providing the result message to the user.

In the above mentioned security assurance method, it is preferable that the above mentioned step of the server authenticating the session request further comprises: a step of the server assigning a unique session number corresponding to the session request from the client; a step of registering a user ID and a public key of the client for this session number; a step of calculating a common key from the public key of the client and the secret key of the server; a step of decoding the message from the client based on this common key; and a step of authenticating the message from the client based on the public key of the client, so that security is improved by registering the user ID and the public key of the client for each session.

In the above mentioned security assurance method, it is preferable that the above mentioned step of the client authenticating the transmitted application further comprises: a step of the client calculating a common key from a public key of the server and the secret key of the client; a step of decoding the message from the server based on this common key; and a step of authenticating the message from the server based on the public key of the server.

In the above mentioned security assurance method, it is preferable that the above mentioned application transmitted to the client pre-defines the processing which can be requested to the server for each client, so as to implement security among a plurality of clients.

In the above mentioned security assurance method, it is preferable that the above mentioned step of the server, deciding whether the transmitted message, is valid decides whether the application transmitted from the server to the client has been altered.

It is preferable that the above mentioned security assurance method further comprises: a step of the client calculating a message hash value of the above mentioned application; a step of the client sending the message hash value and/or the electronic signature generated thereof to the server; and a step of the server calculating a message hash value of the application; and a step of the server comparing the calculated message hash value with the message hash value attached to the message.

A method of assuring security between an OS and an application according to the present invention comprises: a step of the application requesting processing to the OS; a step of the OS authenticating the processing request; a step of the OS transmitting a program corresponding to the processing to the requesting source application; a step of the application enabling execution of the program and deciding whether the command which was input to the program is permitted; a step of the application rejecting the command when the command is not permitted; a step of the application executing the command and transmitting the message to the OS when the command is permitted; a step of the OS deciding whether the transmitted message is valid; a step of the OS rejecting the message when the message is not valid; a step of the OS executing the message and transmitting a result message thereof to the application when the message is valid; and a step of the application providing the result message to the user.

According to the present invention, a medium recording a program for a computer to execute a method for assuring security between a server and a client comprises: a step of the client requesting a session to the server; a step of the server authenticating the session request; a step of the server transmitting a corresponding application to the requesting source client; a step of the client authenticating the transmitted application; a step of the client enabling execution of the application and deciding whether the command which was input to the application is permitted; a step of the client rejecting the command when the command is not permitted; a step of the client executing the command and transmitting the message to the server when the command is permitted; a step of the server deciding whether the transmitted message is valid; a step of the server rejecting the message when the message is not valid; a step of the server executing the message and transmitting a result message thereof to the client when the message is valid; a step of the client authenticating the transmitted result message; and a step of the client providing the result message to the user.

According to the present invention, a medium recording a program for a computer to execute a method for assuring security between an OS and an application comprises: a step of the application requesting processing to the OS; a step of the OS authenticating the processing request; a step of the OS transmitting a program corresponding to the processing to the requesting source application; a step of the application enabling execution of the program and deciding whether the command which was input to the program is permitted; a step of the application rejecting the command when the command is not permitted; a step of the application executing the command and transmitting the message to the OS when the command is permitted; a step of the OS deciding whether the transmitted message is valid; a step of the OS rejecting the message when the message is not valid; a step of the OS executing the message and transmitting the result message thereof to the application when the message is valid; and a step of the application providing the result message to the user.

The medium includes, for example, a floppy disk, a hard disk, a magnetic tape, a magneto-optical disk, a CD-ROM, a DVD, a ROM cartridge, a RAM memory cartridge with backup battery, a flash memory cartridge and a non-volatile RAM cartridge.

Such a cable communication medium as telephone lines, and such a radio communication medium as microwave lines are also included. The Internet is also included in the communication medium mentioned here.

A medium is a material substance where information (mainly digital data and programs) is recorded by some physical means, and allows a processing unit, such as a computer and a dedicated processor, to execute predetermined functions. In essence a medium downloads a program to the computer by some means and has the computer execute predetermined functions.

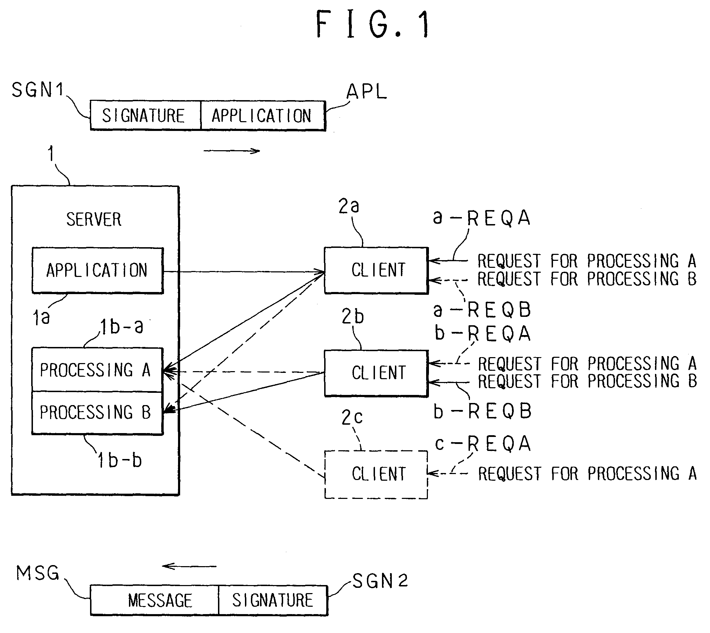

Fig. 1 is a diagram depicting the present invention. According to the request from the client 2, the server 1 sends the application APL to the client 2 along with the signature SGN 1. The client 2 requests processing to the server based on this application. In Fig. 1, the client 2a can execute the processing A but is not permitted to execute the processing B. The client 2b can execute the processing B but is not permitted to execute the processing A. When the user of the client 2a requests the processing A (a-REQA), the request is accepted and the message MSG is sent to the server along with the signature SGN 2. The server 1 accepts the request for the processing A and returns the result of the processing A to the client 2a. When the processing B (a-REQB) is requested, however, this processing, which is permitted only to the client 2b, is rejected by the application. In Fig. 1, the solid line indicates a request which will be permitted, and the dotted line indicates a request which will be rejected. Now a client 2c attempts to access the server 1 illegally. However the request from the client 2c is rejected by the server 1. This is because server 1 can detect illegal access by the signature SGN 2 attached to the message MSG.

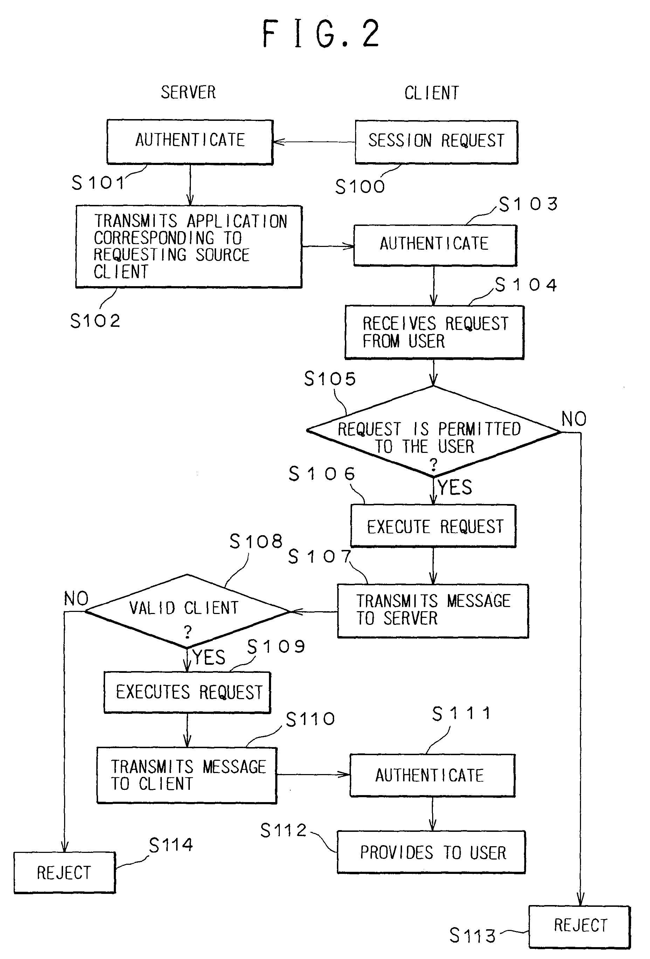

Fig. 2 is an operation flow chart of the present invention. The client requests the start of the session to the server (S100). The server authenticates whether this request is valid (S101). If valid, the server transmits a corresponding application to the requesting source client (S102). The application includes the permission information of the processing for each client. By this, the processing content which each client can request can be limited. The client authenticates the received application (S103). If valid, the client opens the application, starts the processing and receives a request from the user (S104). When a request is received fromthe user, the client judges whether this request is permitted to the user (client) (S105). If not permitted, the request is rejected (S113), and if permitted the client executes the request (S106) and sends the message to the server (S107). The server verifies whether the received message is from a valid client and/or whether the application of the client has been altered (S108). This is to reject a request from an invalid client, and to prevent an illegal action of the valid client from altering the application and from requesting processing other than permitted processing. An invalid request is rejected (S114), and a valid request is executed (S109). The processing result message is transmitted to the client (S110). The client authenticates this message (S111) and provides it to the user if there are no problems (S112).

In order to implement security in step S108, it is necessary for the server to detect alteration of the application, and to reject access from the client at that time. The server detects alteration as follows. A message hash value of the program to be executed by a "reliable part" of the client or an electric signature generated thereof is sent to the server, and the server knows whether the program is reliable. The "reliable part" of the client is a part established in the steps S100 to S103. If an attempt is made to execute an altered program, the message hash value of the program after calculation changes to a different value, and the server can judge that the program is not reliable.

For a large data string, short data which represents this data string can be calculated, and this short data is called a "message hash" or a "fingerprint". This has the following nature.

(1) A same message hash value is always generated for a same data string, and if a part of the original data string is changed (at random), the message hash value also changes in most cases.

(2) It is very difficult to intentionally create the original data string which generates a message hash value.

Known message hash calculation methods are MD4 and SHA-1. The size of the message hash is, for example, 160 bits in the case of SHA-1.

In the above case, when an electronic signature is generated for an application, first a message hash is calculated for the entire file, then a public key encryption algorithm is applied to it and the electronic signature is determined.

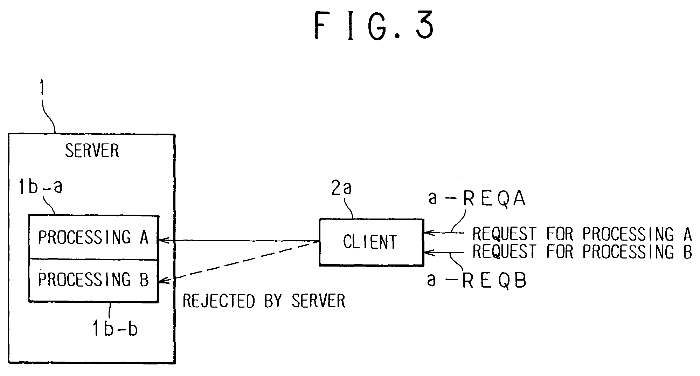

The system in Fig. 1 has an advantage when a plurality of clients 2 perform a joint operation via the server 1. For example, if the client 2a is permitted to execute a common processing, which is not illustrated, and a processing A, and the client 2b is permitted to execute the common processing and the processing B, the clients 2a and 2b can share a certain processing while keeping the private information of each client. In the case of the conventional system shown in Fig. 3, on the other hand, the server is in charge of security, and the server and the client are in a 1-to-1 correspondence, so the system does not have the above mentioned advantage.

According to this invention, the security of the server, when the client accesses the server, can be improved. For example, a predetermined processing (operation) to the server is permitted for each client, and another processing is not permitted. Conventional encryption methods merely increase the security of a message between a server and a client. Conventionally, security based on an ID and password, which depends on the OS, is limited and inflexible. This invention, on the other hand, implements security at the application level, and the content of security can be set and changed relatively freely. This function is particularly necessary for a collaboration server. If security can be set at the application level, this means that a security model can be set for each business model. This is extremely important to implement electronic commerce on the Internet.

Implementing security at the application level not only implements security in an application but also implements the security of the application itself. If a security based on the application is decoded, breaking the security is relatively easy. Decoding an application program is generally easier than ordinary deciphering. So if a program is decoded, security becomes invalid. Therefore, it is necessary to prevent decoding an application, and when the application is decoded and altered, this must be detected and rejected as an invalid access.

Finally, it is critical whether the execution environment of the client is reliable for the server. That is, (1) whether the client itself is reliable, the client is valid, or the client is one which may access illegally, (2) whether the program being executed by the client has not been altered, and (3) whether a message sent from the client has not been altered.

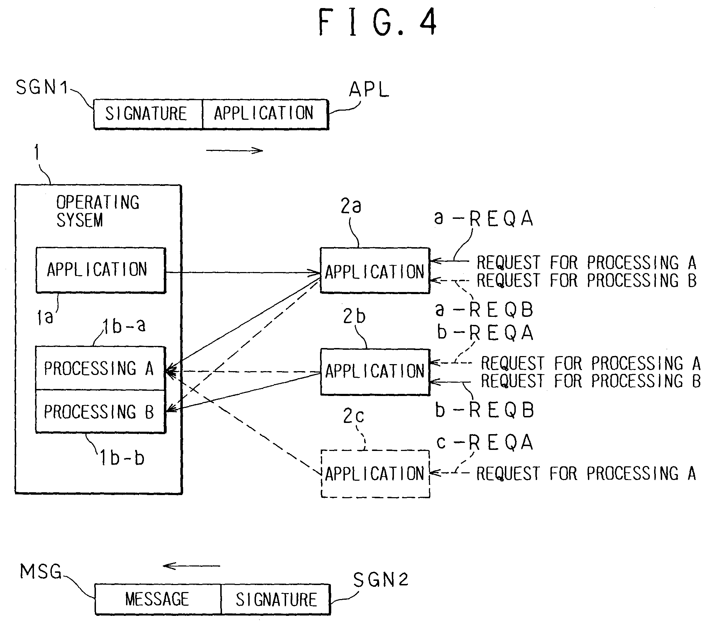

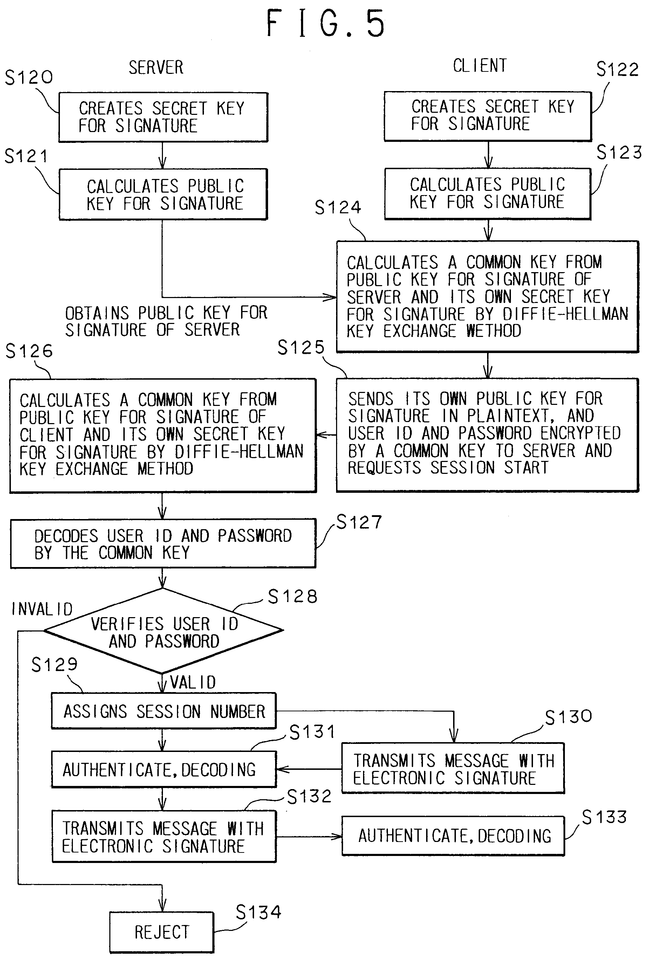

In the above description, the case of a client server system was used as an example, but the present invention is not limited to this. For example, the present invention can be applied to the case between the OS and the application software shown in Fig. 4. Fig. 5 shows a more specific flow chart, which will be described later.

### BRIEF DESCRIPTION OF THE DRAWINGS

Fig. 1 is a diagram depicting the case when the present invention is applied to a client server system;
Fig. 2 Fig. 2 is an operation flow chart when the present invention is applied to a client server system;
Fig. 3 is a diagram depicting the security of a conventional client server system;
Fig. 4 is a diagram depicting the case when the present invention is applied to an OS and an application;
Fig. 5 is an operation flow chart of the security of the embodiment;
Fig. 6 is a functional block diagram of the general system of the embodiment;
Fig. 7 is a diagram depicting the concept of the system of the embodiment;
Fig. 8 is a diagram depicting the general processing of the system of the embodiment;
Fig. 9 is a processing flow chart of the client of the system of the embodiment;
Fig. 10 is a processing flow chart of the server of the system of the embodiment;
Fig. 11 is a processing flow chart of another client of the system of the embodiment;
Fig. 12 is a security processing flow chart of the system of the embodiment;
Fig. 13 is an example of a display screen of the message board system according to the embodiment;
Fig. 14 is a functional block diagram depicting the image generation of a post office box system according to the embodiment;
Fig. 15 is a processing flow chart depicting the security of the post office box system according to the embodiment; and Fig. 16 is an example of the display screen of the post office box system according to the embodiment.

### DESCRIPTION OF THE PREFERRED EMBODIMENTS

The system of an embodiment of the present invention is an icon-driven server/client system. The major difference from a conventional system is that a message can be addressed intuitively and directly by dragging and dropping an icon. The system of this embodiment provides a new communication and joint operation method in the Internet/intranet community.

This system can be used very easily. The user merely accesses the server, then such boards as a message board, white board, chess board, maps and images, which are described later, can be used at any time, and a desired message can be written and sent over the Internet by dragging and dropping an icon on the board to share the message with other individuals.

The features of this system are easy to install, easy to use, and easy to customize. Also this system is easier to use than any other communication, collaborative and joint operation software, including message boards, labeling software, white boards, chat and electronic mail.

To use this system, the server must be a CGI supported Web server which supports Java. The client must be a Java supported Web browser which supports the virtual machine/runtime environment of Java.

This system has the following functions.
- Message creation function
   This is a function to create a message to send to the destination. For example, when an icon to send a message is clicked, a dialog box is displayed on a screen, and the icon and a message are linked by writing the message in this dialog box. This dialog box may be displayed not only when the icon is clicked, but also when the icon is dragged and dropped.
- Message addressing function
   This is a function to decide the destination to which a message is sent. The destination must be input by characters in conventional electronic mail software. Specifically, this function defines and controls an area on the screen corresponding to each client, and judges which area an icon is dragged and dropped, that is, which destination the message is addressed to.
- Security function
   This is a function to control access to an icon and/or message. This function grants permission to read, move, correct or delete an icon and/or message. For example, anyone can read the message of an icon posted in a public space, but only the specified individual can read an icon message posted in a private space. The specific method of implementing the security function will be described later.
- Broadcast function
   This is a function to send a message to all users without specifying a specific destination.
- Association function
   This is a function to set a link to a related home page, and set and display such an attribute as emergency, sold out, discount and new product.

The embodiment of the present invention will now be described in more detail with reference to the accompanying drawings.

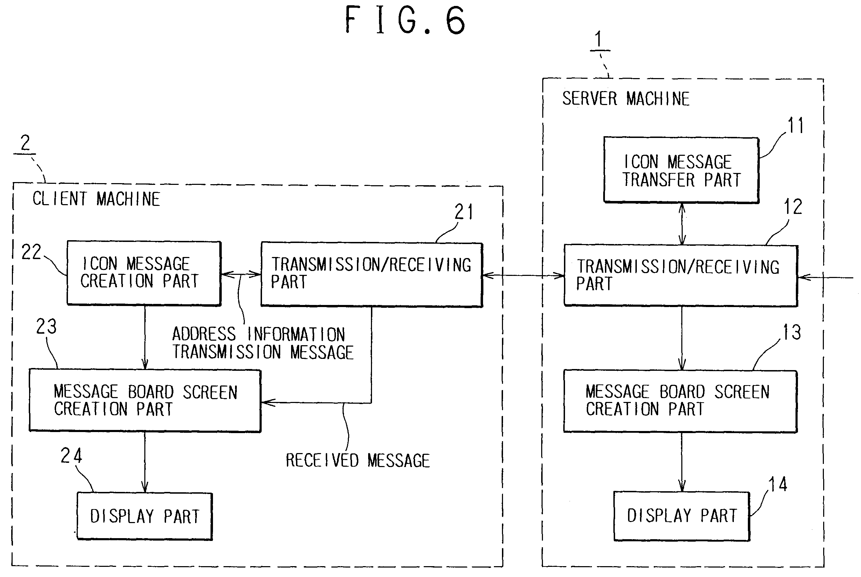

Fig. 6 is a functional block diagram depicting the general configuration of a server machine 1 and a client machine 2 which are used for this system. The server machine 1 comprises a message transfer part 11 which transfers a received message when necessary, a transmission/receiving part 12 for communicating with a client machine, a message board screen creation part 13 which creates a screen of the message board based on the received message, and a display part 14 which receives the output of the screen creation part 13 and displays the screen. The client machine 2 comprises a transmission/receiving part 21 for communicating with the server machine, a message creation part 22 which creates a transmission message, a message board screen creation part 23 which receives a transmission message from the message creation part 22, receives a received message from the transmission/receiving part 21, and displays these messages on the message board, and a display part 24 which receives the output of the screen creation part 23 and displays it on the screen.

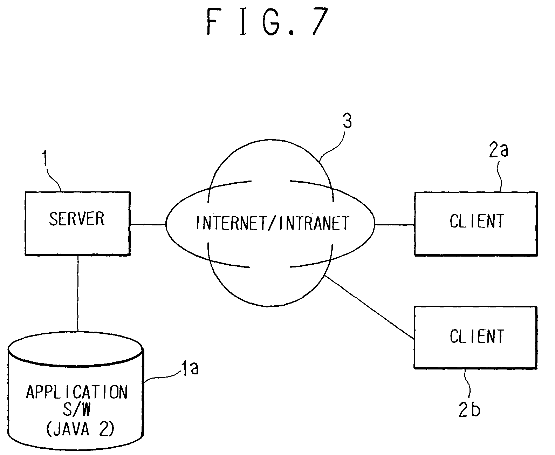

Fig. 7 is a diagram depicting the concept of the general configuration of this system. The clients 2a and 2b can access the server 1 via Internet/intranet 3. The server 1 stores an application software (Java applet) for this system in an external memory 1a in advance. When the client accesses the server, application software for the client is downloaded and this system can be used.

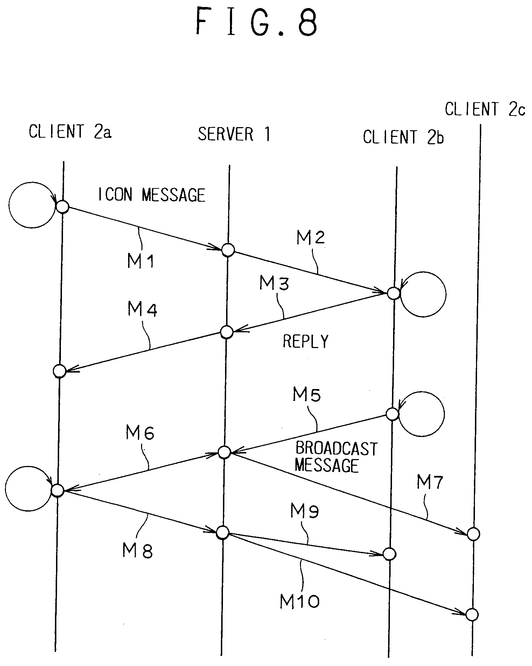

Fig. 8 is an overview of a message exchange between the server and clients 2a, 2b and 2c. When the client 2a creates a message, the message M1 is sent to the server 1 and is also displayed on the self screen. The server 1 identifies the destination of the received message M1, and sends it to the corresponding destination, client 2b (M2). When the client 2b creates a reply message, the reply message is sent to the client 2a (M3, M4). If the message is for broadcast, the message M5 sent from the server 1 is also sent to all other clients 2a and 2c (M6, M7). In the same way, the reply message M8 from the client 2a is also sent to all the clients 2b and 2c (M9, M10). In this way, a message can be communicated among all clients 2a, 2b and 2c via the server 1.

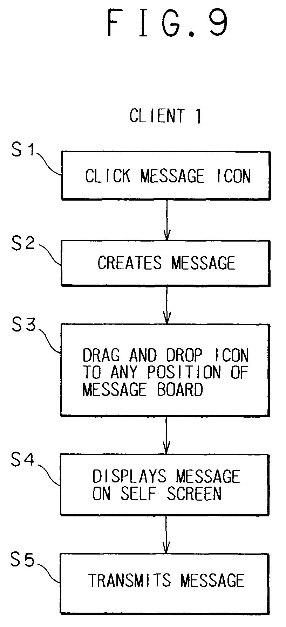

Fig. 9 shows a processing flow at the client which transmits a message. At first, the user clicks the message icon (S1), then the message creation dialog is displayed. Here the user can create an arbitrary message (S2). The user drags and drops the icon to an arbitrary position of the message board (S3). By this operation, the user can also send a message. The client displays the message on the self screen (S4), and transmits the message (S5).

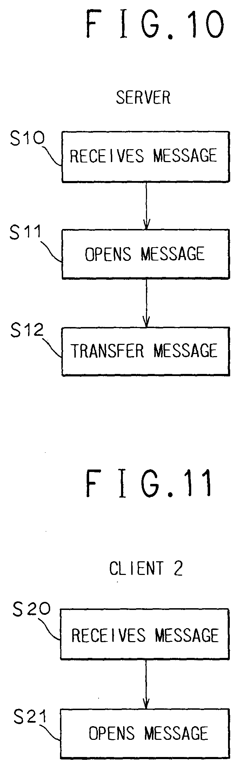

Fig. 10 shows a processing flow of the server. When a message is received (S10), the server opens the message (S11), and stores it in the self memory. And the server transfers the message to a predetermined destination (S12).

Fig. 11 shows a processing flow of the client which receives the message. When a message is received from the server (S20), the client opens the message (S21) and displays the message on the self message board.

By the processing in Fig. 9 to Fig. 11, written messages in each client are immediately mirrored on the screens of the other clients. In this way, the transmission/receiving of a message between arbitrary clients can be known synchronously in real-time. Management is easy since all information masses at the server.

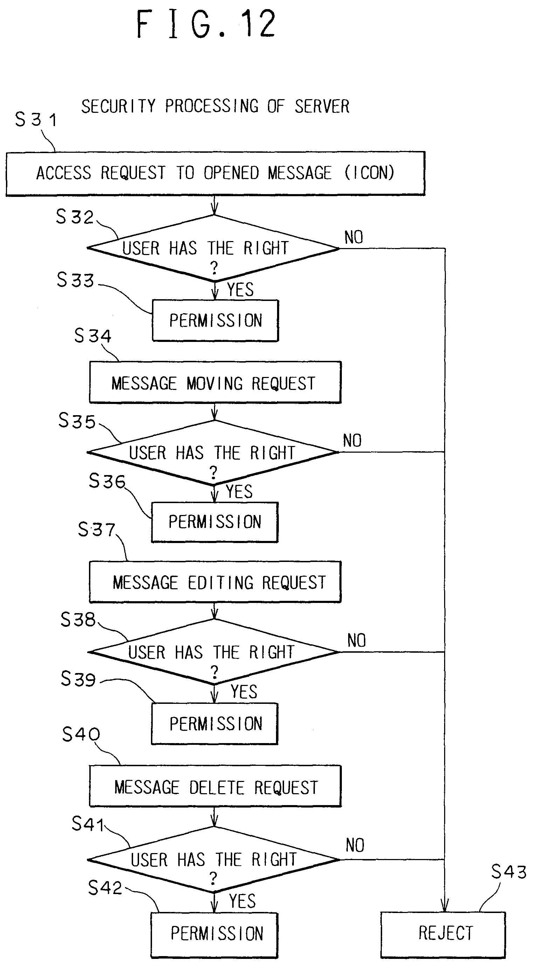

Fig. 12 shows a security processing flow of the server. When an access request to an opened message (icon) is received (S31), the server checks whether the requesting source user has the right (S32), permits access if the user has the right (S33), and rejects if the user does not have the right (S43). The same processing is also executed when moving a message (that is, changing a transmission destination address), editing a message, or deleting a message if requested (S34 - S42). For example, if this system is a bulletin board where anyone can access, accessing and moving a message is permitted to anyone. Editing and deleting a message, however, are permitted only to the transmitter of the message or to the administrator.

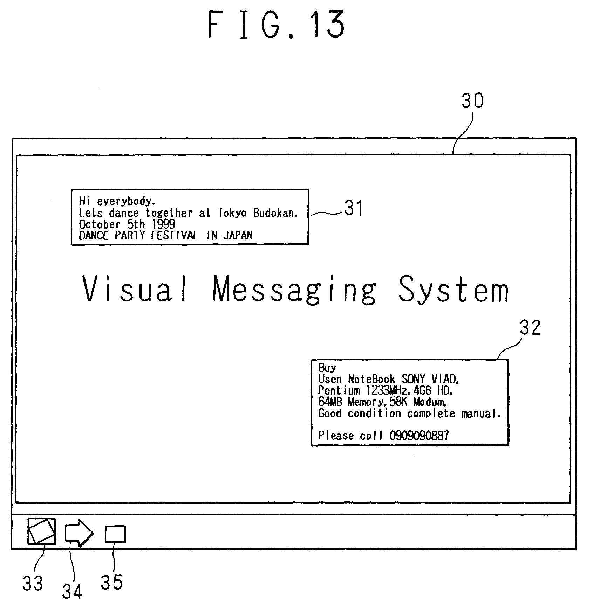

Fig. 13 shows an example of the message board screen of this system. On the screen, the message board 30 and the examples 31 and 32 of the message to be displayed here are displayed. The icons 33, 34 and 35 at the bottom of the screen are a message creation icon 33, a GO icon 34 to create a link to a related home page, and a trash can icon 35 to delete a message respectively.

Based on Fig. 13, the operation method of this system will be described. When a message is sent, the icon 33 is clicked to create a message. Then the icon 33 is dragged and dropped to an arbitrary position of the message board. Then the message is opened and can be read, as shown in 31 and 32. The status of this screen is the same for all the clients because of the flow shown in Fig. 8. Therefore, the user can read all the messages on the screen of the user's client machine. Unlike the conventional broadcasting of electronic mail, this system can send the message to all users participating in the system without specifying destinations. Since icons are used, operation is intuitive, easy to understand, and very easy to use.

Security problems do not become very acute in this message board. Anyone can create a message, and post and delete a message. Naturally it is easy to heighten security so that only a specified individual (e.g. administrator) can move and delete a message (see Fig. 12).

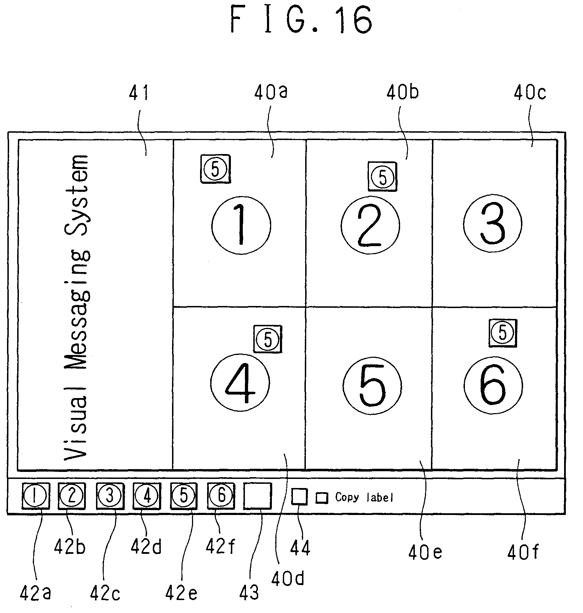

One application example of the message system according to this invention will be shown. This is a simulation of a mail box (post office box). Each user has their own post office box (areas 40a - 40f in Fig. 16) and icons 42a - 42f. This post office box system is a good example of a system where a relatively small group (e.g. 5 to 10 individuals) communicate and perform joint operation.

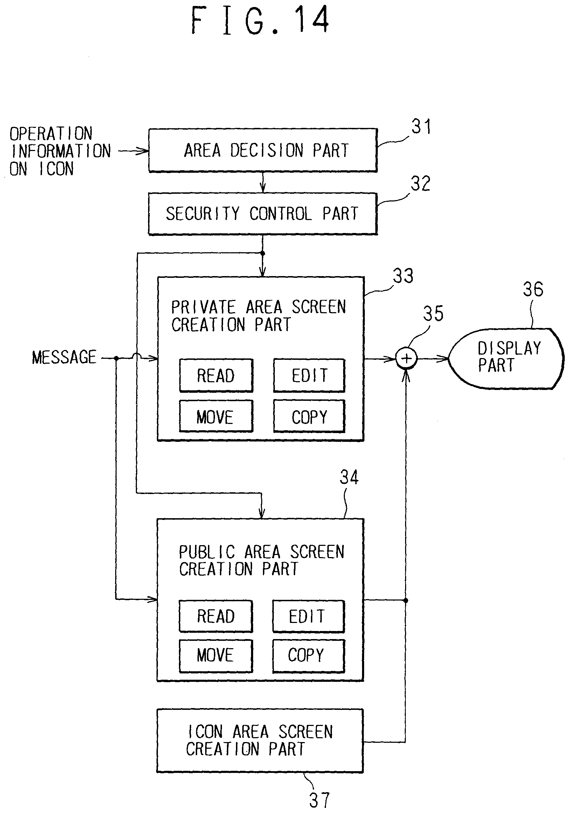

Fig. 14 shows a functional block diagram of this system. In Fig. 14, a security control part and an image display part of the system are shown. The private area screen creation part 33 creates a screen of the areas 40a - 40f for each user. The private area screen creation part 33 may be created for each user area 40a - 40f. The private area screen creation part 33 has functions to read, edit, move and copy an icon. These functions are executed according to the permission from the security control part 32. The public area screen creation part 34, on the other hand, generates a screen of the public area 41. In this area, the user can freely operate any icon. The operation information for an icon is input to the area decision part 31 where the area of the icon which is operated is decided. Based on this decision result, the security control part 32 judges whether operation of this icon is permitted. This output is sent to each private area screen creation part 33. When security control is required in the public area, this output is also sent to the public area screen generation part 34. The outputs of the screen creation parts 33 and 34 are synthesized by the synthesis part 35 and are displayed on the display part 36.

When a message is sent to another member in this system, the user drags the self icon (e.g. icon 42e for the user in the area 40e) to the destination post office box (e.g. area 40a, 40b, 40d, or 40f). For this icon, only the receiving user can read the message. Other users cannot read, move or delete this message. The public area 41 at the left is for all users, and a message posted in this area can be read, moved or deleted by any user. Also, just like the case of the message board, the security function may be heightened so that only the administrator can move and delete a message. The emergency icon 43 may be dragged to the message board for an emergency message. In this case, not an icon but the message itself may be displayed. To send a message to a plurality of destinations, the icon is copied and moved to the destination area.

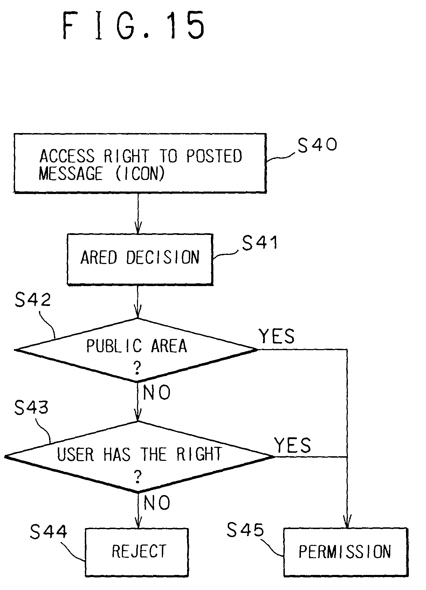

Fig. 15 shows a flow chart on security.

When an access request to a posted message (icon) is received (S40), the area is judged first (S41). If the area judged is a public area, access is permitted (S45). Otherwise, whether the user has the right is checked (S43), access is permitted if the user has the right (S45), and access is rejected if the user does not have the right. The specific method of security will be described later.

According to the system of this embodiment, a message is represented by an icon, and a message can be transmitted by dragging and dropping the icon, so a very clear interface can be provided. Also security control is performed based on the area of the screen, so processing is easy and can be easily understood by the user. A user other than the one receiving the message cannot read the message, but can know the users who exchange a message since the position of an icon can be recognized.
- Description on security mechanism
   The security mechanism applied to the system comprising the above mentioned collaboration server will be described with reference to Fig. 5. In the following description, a known algorithm of an electronic signature and a calculation algorithm of a message hash value are used.

The server creates its own "secret key for signature" at random at startup (S120), and calculates the "public key for signature" from this (S121). If requested, the server transmits the public key as plaintext to all the clients (including those not authenticated).

The client creates its own "secret key for signature" at random in the same way before starting the session (S122), and calculates the "public key for signature" from this (S123).

The client obtains the "public key for signature of the server" from the server before starting the session.

The client calculates a common key from the above obtained "public key for signature of the server" and its own "secret key for signature of the client" using a known key exchange method (S124).

The client requests the start of the session to the server by attaching its own "public key for signature" in plaintext, the user ID encrypted by the above calculated common key, and the password (S125).

When the server receives the session start request, the server calculates a common key from the attached "public key for signature of the client", and its own "public key for signature of the server" in the same way by the key exchange method (S126). This value is the same as the value calculated by the client.

The server decrypts the encrypted part in the session start request by the common key determined by the above calculation (S127). The user ID and the password included in this part are verified (S128), and a unique session number is assigned if the user ID and the password are valid (S129), and the session start request is rejected if not (S134). The user ID and the public key of the client are registered with this session number. Also this assigned session number is notified to the client. Security is heightened since the signature changes for each session in this way.

Hereafter, communication from the client and server is sent inplaintextwithattachingthesessionnumber, encrypted message and electronic signature for this entire transaction (S130). The server calculates the public key of the client and the common key for encryption from this session number, and verifies the signature and decrypts the encrypted part (S131).

Communication from the server to the client is encrypted by the common key, and the electronic signature is attached (S132). The client verifies and decrypts using the public key of the server and the common key for encryption, which were obtained before (S133).

By the above procedure, the following security can be assured.

### (1) Security against third party

Even if a third party intercepts all the information of the communication, the third party cannot know the common key for encryption, so the third party cannot know the content of the communication.

### (2) Security for server side

This system can assure the server that the user who requested the session first (this user is the user who knows at least the password) and the user who uses the session thereafter are the same user (the user who knows at least the same secret key). By this, the authentication procedure for each message can be omitted. It is also assured that the message transmitted from the server can be deciphered only by the same user as the user who requested the session first.

### (3) Security for client side

It is assumed that only the user, who knows the secret key to be paired with the public key which the client obtained from the server first, can decipher the message transmitted by the client. For the message sent from the server, it is assumed that the message is from the same user as the user who issued the public key obtained from this server first. This can prevent a takeover in the middle of communication. Note that the validity of the public key, which is obtained from the server first, ultimately depends on the validity of the Internet DNS.

### (4) General security

Each key used for the system according to this embodiment is completely disposable. This system is more difficult to be deciphered than the encryption method using a same key. Also an authorization station by a third party is not required.

The present invention is not limited by the above embodiment, but can be modified in various ways within the scope of the invention stated in the Claims, and these are, needless to say, included in the scope of the present invention.

In this description, means does not always mean a physical means, but includes the case when the function of each means is implemented by software. Also, a function of one means may be implemented by two or more physical means, or two or more functions of a means may be implemented by one physical means.

## Claims

1. A method for assuring security between a server and a client, comprising:
a step of the client requesting a session to the server;
a step of the server authenticating said session request;
a step of the server transmitting a corresponding application to the requesting source client;
a step of the client authenticating said transmitted application;
a step of the client enabling the execution of said application and deciding whether the command which was input to said application is permitted;
a step of the client rejecting said command when the command is not permitted;
a step of the client executing said command and transmitting the message to the server when the command is permitted;
a step of the server deciding whether said transmitted message is valid;
a step of the server rejecting said message when the message is not valid;
a step of the server executing said message and transmitting a result message thereof to the client when the message is valid;
a step of the client authenticating said transmitted result message; and
a step of the client providing said result message to the user.

2. The security assurance method according to Claim 1, wherein said step of the server authenticating said session request comprises:
a step of the server assigning a unique session number corresponding to said session request from the client;
a step of registering a user ID and a public key of the client for this session number;
a step of calculating a common key from the public key of the client and the secret key of the server;
a step of decoding the message from the client based on this common key; and
a step of authenticating the message from the client based on said public key of the client, and
wherein security is improved by registering the user ID and the public key of the client for each session.

3. The security assurance method according to Claim 1, wherein said step of the client authenticating said transmitted application comprises:
a step of the client calculating a common key from a public key of the server and the secret key of the client;
a step of decoding the message from the server based on this common key; and
a step of authenticating the message from the server based on said public key of the server.

4. The security assurance method according to Claim 1, wherein said application transmitted to the client pre-defines processing which can be requested to the server for each client, so as to implement security among a plurality of clients.

5. The security assurance method according to Claim 1, wherein said step of the server deciding whether said transmitted message is valid decides whether said application transmitted from the server to the client has been altered.

6. The security assurance method according to Claim 5, further comprising:
a step of the client calculating a message hash value of said application;
a step of the client sending said message hash value and/or electronic signature generated thereof to the server;
a step of the server calculating a message hash value of said application; and
a step of the server comparing said calculated message hash value with the message hash value attached to said message.

7. A method for assuring security between an operating system (OS) and an application, comprising:
a step of the application requesting processing to the OS; a step of the OS authenticating said processing request;
a step of the OS transmitting a program corresponding to the processing to the requesting source application;
a step of the application enabling execution of said program and deciding whether the command which was input to said program is permitted;
a step of the application rejecting said command when the command is not permitted;
a step of the application executing said command and transmitting the message to the OS when the command is permitted;
a step of the OS deciding whether said transmitted message is valid;
a step of the OS rejecting said message when the message is not valid;
a step of the OS executing said message and transmitting a result message thereof to the application when the message is valid; and
a step of the application providing said result message to the user.

8. A medium recording a program for computer to execute a method for assuring security between a server and a client, said method comprising:
a step of the client requesting a session to the server;
a step of the server authenticating said session request;
a step of the server transmitting a corresponding application to the requesting source client;
a step of the client authenticating said transmitted application;
a step of the client enabling execution of said application and deciding whether the command which was input to said application is permitted;
a step of the client rejecting said command when the command is not permitted;
a step of the client executing said command and transmitting the message to the server when the command is permitted;
a step of the server deciding whether said transmitted message is valid;
a step of the server rejecting said message when the message is not valid;
a step of the server executing said message and transmitting a result message thereof to the client when the message is valid;
a step of the client authenticating said transmitted result message; and
a step of the client providing said result message to the user.

9. A medium recording a program for a computer to execute a method for assuring security between an OS and an application, said method comprising:
a step of the application requesting processing to the OS;
a step of the OS authenticating said processing request;
a step of the OS transmitting a program corresponding to the processing to the requesting source application;
a step of the application enabling execution of said program and deciding whether a command which was input to said program is permitted;
a step of the application rejecting said command when the command is not permitted;
a step of the application executing said command and transmitting the message to the OS when the command is permitted;
a step of the OS deciding whether said transmitted message is valid;
a step of the OS rejecting said message when the message is not valid;
a step of the OS executing said message and transmitting the result message thereof to the application when the message is valid; and
a step of the application providing said result message to the user.

10. A computer program comprising code means adapted to perform the steps of the method of any of claims 1 to 7 when controlling a server/client computer system.
